# EUROPEAN PATENT APPLICATION

(11) **EP 4 336 296 A1**
(43) Date of publication of application: **13.03.2024**
(21) Application number: 21940759.0
(22) Date of filing: 19.05.2021
(51) Int. Cl.: G05D 1/02

(54) **ROBOT WORK APPARATUS**

(71) Applicant: Yamabiko Corporation, Ohme-shi Tokyo 198-8760 (JP)
(72) Inventor: HIRAKI, Hidenori, Ohme-shi, Tokyo 198-8760 (JP); ISHII, Miho, Ohme-shi, Tokyo 198-8760 (JP); KOSHIKAWA, Yoshiharu, Wavre, Brabant Walloon (BE)
(74) Representative: Canzler & Bergmeier Patentanwälte Partnerschaft mbB
(86) International application number: PCT/JP2021/018991
(87) International publication number: WO 2022/244143

(57) **Abstract**

The present invention enables an individual region assigned a meaning with regard to a work region to be set immediately. This robot work apparatus comprises a work robot that performs work while traveling autonomously in a set work region and a control unit that controls the operation of the work robot. The control unit comprises a work region setting unit that sets the work region as a section, and the work region setting unit sets an individual surrounding region that overlaps with the set work region.

## Description

### Technical field

The present invention relates to a robotic working apparatus configured to perform work while autonomously traveling on a field.

### Background art

Conventionally, there has been known a working robot configured to perform work such as mowing work while autonomously traveling in a working area (see Patent Literature 1 below). According to this related art, a virtual boundary line is designated for a working area by a user, the working area is divided into a plurality of areas by the designated virtual boundary line, and a preferential working area is set to each of the divided areas.

### Citation list

### Patent Literature

PTL1: Japanese Patent No. 5973608

### Summary of Invention

### Problem to be solved by the invention

According to the above-described related art, the virtual boundary line is drawn on the working area to divide the working area into the plurality of areas once, and additionally, the user makes meanings such as a priority for each of the divided areas. It is because the working area can be divided but the divided areas are not designated, by inputting one boundary line. Therefore, for example, when a preferential working area is tried to individually set to part of the working area, there is need to provide a step of dividing the area by a boundary line and a step of making meanings of the divided areas. This causes a problem that it is not possible to speedily set a preferential working area.

In addition, in a case where the original working area has a complicated outer shape, and in a case where the working area includes non-working districts such as buildings, electric poles, and passages, the dividing boundary lines to be set are complicated. This causes a problem of taking a long time to set the dividing boundary lines. Meanwhile, when the working area having a complicated outer shape is divided by a virtual boundary line, part of the complicated outer shape of the original working area remains with the outer shape of the divided area. This cases a problem that it is not possible to easily partition a working area having a simple shape such as a rectangle.

The present invention is intended to address the above-described problems. It is therefore an object of the invention to be able to speedily set an individual area having a meaning for the working area, and to be able to speedily and easily partition a working area having a desired shape for the working area having a complicated outer shape.

### Solution to Problem

To achieve the above-described object, the invention provides a robotic working apparatus including: a working robot configured to perform work while autonomously traveling in a set working area; and a controller configured to control motion of the working robot and including a working area setting section configured to partition and set the working area. The working area setting section sets an individual enclosed area overlapping with an existing working area.

### Effect of the invention

According to the invention, by setting an enclosed area, the area is divided into an enclosed area and an unenclosed area. In this way, by setting the enclosed area, it is possible to determine an area to be uniquely designated, and therefore to speedily set an individual area having a meaning for the set working area. Moreover, even when the working area has a complicated land form including non-working districts such as buildings, electric poles, and passages inside the outer shape or the area of the complicated land form, it is possible to speedily and easily set a working area having a desired shape by a single action of setting an enclosed area. Consequently, it is possible to provide a human interface with screen input by making use of the sense of the operator.

### Brief Description of Drawings

Fig. 1 illustrates a robotic working apparatus including a field and a base;
Fig. 2 illustrates a configuration example of the robotic working apparatus (an example where a working robot performs mowing work);
Fig. 3 illustrates a configuration example of the robotic working apparatus (an example where the working robot performs collection work);
Fig. 4 illustrates a system configuration of the robotic working apparatus;
Fig. 5 illustrates a controller of the robotic working apparatus;
Fig. 6 illustrates an example of setting an enclosed area by a working area setting section;
Fig. 7 illustrates an example of setting an enclosed area by the working area setting section;

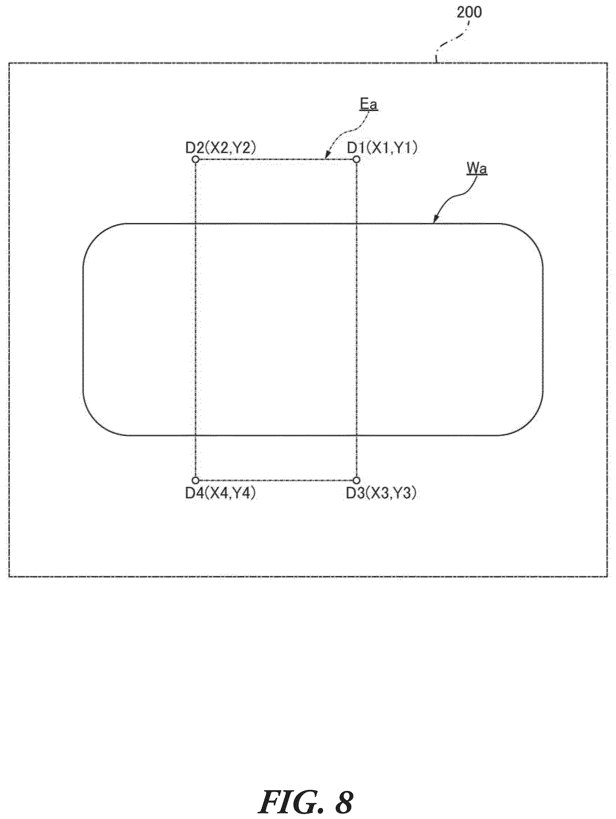

Fig. 8 illustrates an example of setting an enclosed area by the working area setting section;
Fig. 9 illustrates an example of setting an enclosed area by the working area setting section;
Fig. 10 illustrates an example of setting adjacent enclosed areas by the working area setting section ((a) illustrates a state of inputted dot coordinates before being set, and (b) illustrates a second enclosed area set by the dot coordinates;
Fig. 11 illustrates an example of setting adjacent enclosed areas having an overlap area;
Fig. 12 illustrates an example of setting a small district and a non-working area ((a) illustrates a state where an enclosed area Ea is set for a working area Wa, and (b) illustrates a small district Sd and a non-working area Nw in the working area); and
Fig. 13 illustrates an example of setting a traveling route by a traveling route setting section ((a) illustrates an example of setting a traveling route in a small district and traveling routes between the small district and a base, and (b) illustrates an example of setting routes different from previous traveling routes).

### Description of Embodiments

Hereinafter, an embodiment of the present invention will be described with reference to the drawings. In the description below, the same reference numbers in the different drawings indicate the same functional parts, and therefore repeated description for each of the drawings is omitted.

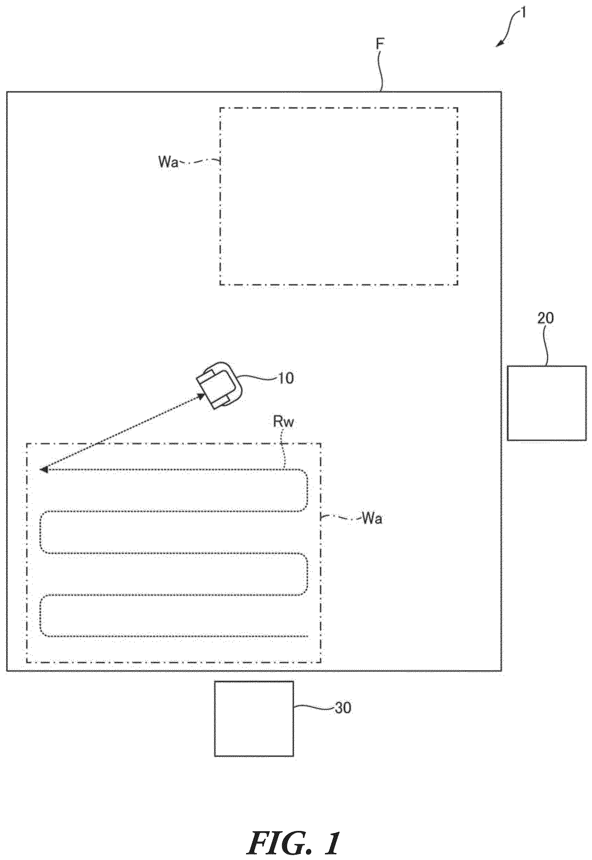

As illustrated in Fig. 1, a robotic working apparatus 1 includes a working robot 10 configured to perform work on a field F. The working robot 10 includes a working tool described later to perform work on the field F, and performs work while autonomously traveling on the field F. The work performed by the working robot 10 is not limited, but may be, for example, mowing work, collection work, and cleaning work.

The robotic working apparatus 1 includes a base 20 for the filed F. The base 20 may be provided in the field F, and may be provided outside the field F as illustrated. The base 20 is, for example, a charging base for the electric working robot 10, and is a discharge place where collected target objects are discharged when the working robot 10 performs the collection work.

In addition, the robotic working apparatus 1 includes a management device 30 as needed. The management device 30 is configured to remotely control the working robot 10, but may be omitted when the working robot 10 is operated by its own controller. The management device 30 may be provided in the field F or outside the field F.

The robotic working apparatus 1 sets a working area Wa for the working robot 10 on the field F. The working robot 10 performs work while autonomously traveling in the set working area Wa. As illustrated in Fig. 1, when a plurality of working areas Wa are set, the working robot 10 completes the work in one working area Wa, and then moves to a different working area Wa. Here, the working areas Wa may be set on the system as a virtual areas based on location information, but may be set as physical areas in the field F by using wires, markers, or beacons.

In the working area Wa, the working robot 10 travels along a set traveling route Rw or travels randomly in any direction to travel in the whole working area Wa and performs the work. The traveling route Rw set in the working area Wa is not limited to the straight route as illustrated, but any route may be set.

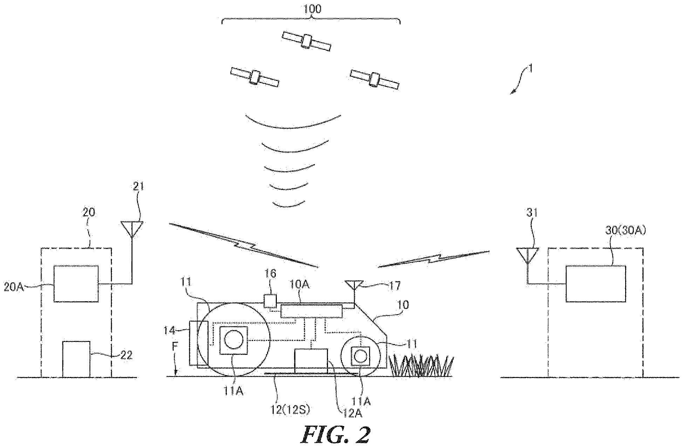

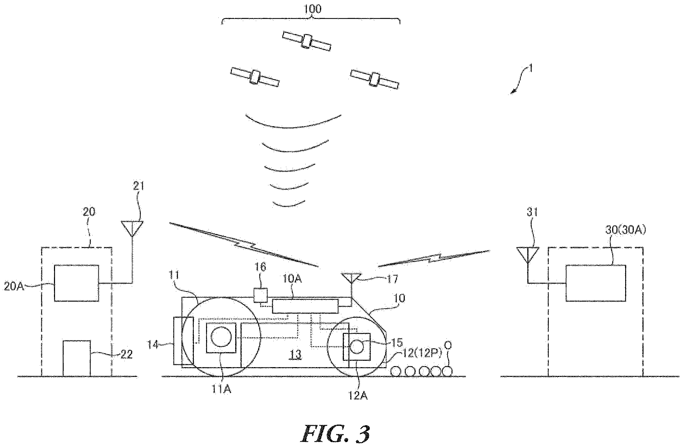

Fig. 2 and Fig. 3 illustrate examples of the configuration of the robotic working apparatus 1. The working robot 10 includes: a traveling part 11 having wheels to travel on the field F; a working tool 12 configured to perform work on the field F; a traveling drive part (motor) 11A configured to drive the traveling part 11; a working drive part (motor) 12A configured to drive the working tool 12; a controller (CPU) 10A configured to control the operation of the traveling drive part 11A and the operation of the working drive part 12A; and a battery 14 as a power source of the working robot 10.

The traveling part 11 includes right and left traveling wheels, and the traveling drive part 11A is controlled to individually drive the wheels. By this means, the working robot 10 can move forward and backward, turn right and left, and steer in any direction.

With an example illustrated in Fig. 2, the working tool 12 of the working robot 10 is a blade device 12S for mowing on the field F. The blade device 12S is rotated or linearly reciprocated by the working drive part 12A to mow grass on the field F.

In addition, the working robot 10 includes a position detector 16 for the autonomous travel. As an example of the position detector 16, a GNSS (global navigation satellite system) sensor configured to receive radio signals sent from satellites 100 of a GNSS system such as a GPS, or a receiver configured to receive radio waves generated by beacons disposed in or around the field F may be used. Here, there may be a plurality of position detectors 16.

To achieve the autonomous travel of the working robot 10, the position detected by the position detector 16 is inputted to the controller 10A, and the controller 10A controls the traveling drive part 11A such that the position of the set traveling route matches the detected position, or the detected position is within the set working area Wa.

The working robot 10 includes a communication part 17 configured to transmit and receive information to and from other devices as needed. By using the communication part 17, the working robot 10 transmits and receives the information to and from, for example, a management device 30 installed in a facility, and a controller 20A of the base 20. In addition, the working robot 10 can transmit and receive the information to and from other working robots deployed on the field F.

The management device 30 is a computer provided in the facility, or a server connected to a network, and includes a communication part 31 configured to transmit and receive the information to and from the communication part 17 of the working robot 10. The base 20 includes the controller 20A and a charging device 22 configured to charge the battery 14. The controller 20A includes a communication part 21 configured to transmit and receive the information to and from the communication part 17 of the working robot 10. The communication parts 17, 21, and 31 can communicate with each other directly or via a network. Here, when the controller 10A of the working robot 10 independently performs the processing for the control, the communication parts 17, 21, and 31, and the management device 30 may be omitted. The controller 20A of the base 20 may also serve as the management device 30.

Fig. 3 illustrates an example where the working robot 10 includes a collection device 12P as the working tool 12 configured to pick up target objects O and put them into an accommodation part 13. With this example, one or each of the collection device 12P and the accommodation part 13 includes a measurement part 15 configured to measure the amount of the collected target objects O. The measurement part 15 may be a counter configured to count the quantity of the target objects O picked up by the collection device 12P, a scale configured to measure the quantity or the weight of the target objects O accommodated in the accommodation part 13, or a load meter configured to measure the work load of the working tool 12. The information measured by the measurement part 15 is inputted to the controller 10A. The other sections of the working robot 10 illustrated in Fig. 3 are the same as those of the example illustrated in Fig. 2.

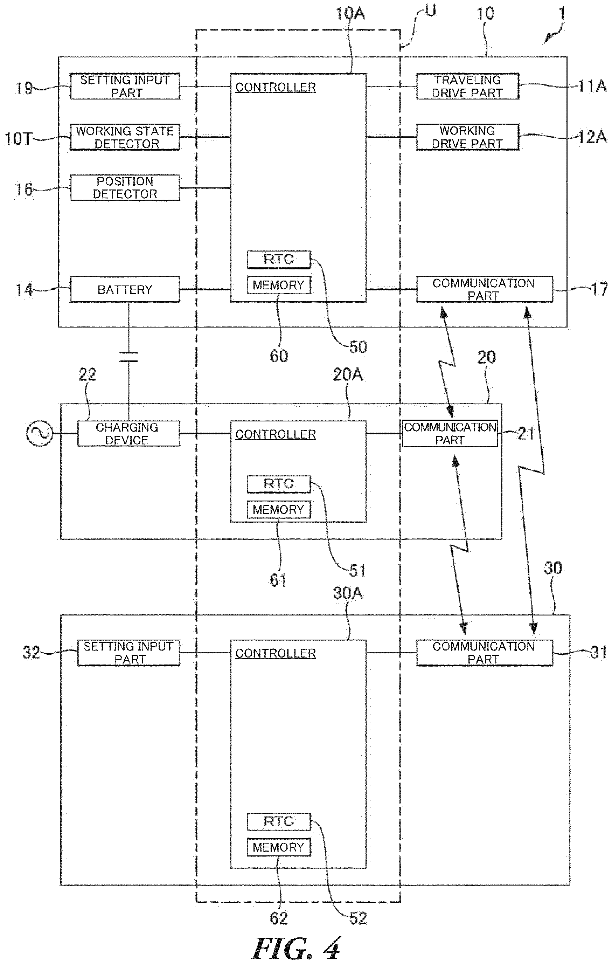

Fig. 4 illustrates an example of the system configuration of the robotic working apparatus 1. The controller 10A of the working robot 10 transmits and receives information via the communication part 17 as described above, and a controller (CPU) 30A of the management device 30 transmits and receives information via the communication part 31. In addition, the controller (CPU) 20A of the base 20 transmits and receives information via the communication part 21.

The controllers 10A, 20A and 30A include timers 50, 51, and 52 such as real-time clocks configured to measure and output the time, and memories 60, 61, and 62 configured to store information and programs, respectively. In addition, the controllers 10A, 20A, and 30A constitute a control unit U which is unified by the exchange of information among the communication parts 17, 21, and 31, and the functions of the controllers 10A, 20A and 30A can be substituted for each other.

The controller 10A of the working robot 10 receives work instruction information (the existing work schedule, the working area, and the traveling route) from a setting input part 19, receives information from a working state detector 10T, receives information about the current position of the working robot 10 from the position detector 16, and receives information about the remaining amount of the battery from the battery 14. Then, the controller 10A controls the traveling drive part 11A and the working drive part 12A based on the inputted information, and causes the working robot 10 to perform the work according to the inputted work instruction information.

When the working tool 12 is the blade device 12S, the working state detector 10T is configured to detect the drive state of the load on a blade. Meanwhile, when the working tool 12 is the collection device 12P, the working state detector 10T is configured to detect the information about the amount of the collected target objects O from the measurement part 15.

The controller 20A provided in the base 20 receives charging process information from the charging device 22 charging the battery 14 of the working robot 10.

The controller 30A of the management device 30 receives work instruction information (the work schedule, the working area, and the traveling route) and management facility information (business hours, users, use places, the state of the field, information about the growth of plants on the field, the amount of supply of the target objects 0, events of the management facility, and event times) from a setting input part 32.

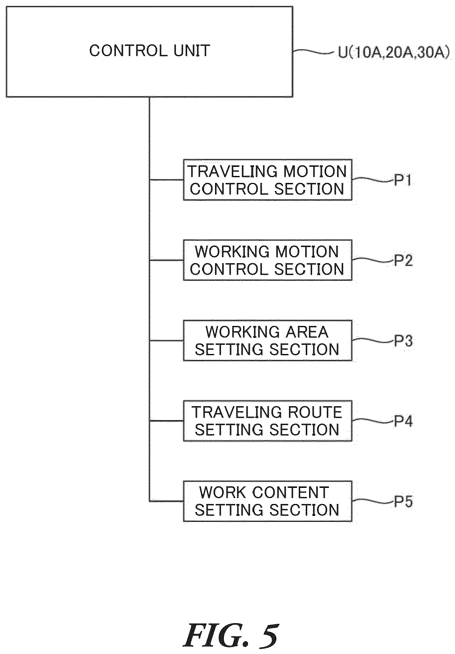

As illustrated in Fig. 5, the control performed by the control unit U (10A, 20A, and 30A) of the robotic working apparatus 1 includes a traveling motion control section P1 to control the autonomous travel of the traveling part 11 (traveling drive part 11A), a working motion control section P2 to control the motion of the working tool 12 (working drive part 12A), a working area setting section P3 to partition and set working areas of the working robot 10, a traveling route setting section P4 to set traveling routes of the working robot 10, and a work content setting section P5 to set a work content (at least one of the work time, the work frequency, the work sequence, and the work load) in the set working area. Here, the traveling motion control section P1, the working motion control section P2, the working area setting section P3, the traveling route setting section P4, and the work content setting section P5 are programs to control the operation of the CPU of the control unit U (10A, 20A, and 30A).

Hereinafter, examples of setting by the working area setting section P3 and the traveling route setting section P4 of the control unit U (10A, 20A and 30A) will be described.

The working area setting section P3 sets a working area based on input operation, by using a display screen 200 which is an input interface for the setting input parts 19 and 32 described above. Here, the display screen 200 corresponds to the whole or part of the field F. The location of a plane coordinate in the display screen 200 corresponds to the location in the field F or part of the field F. For example, when a working area Wa which is part of the field F is displayed on the display screen 200, the plane coordinate encompassing the working area Wa is displayed on the display screen 200.

In a case where the working area has already been set, the working area setting section P3 displays the working area Wa on the display screen 200, based on the location information of the set working area Wa. In this case, when the set working area Wa is a physical area partitioned by a wire, the location information of the wire is obtained and inputted to display the working area Wa on the display screen 200. Meanwhile, when the working area Wa is a virtual area based on the location information, the working area Wa is displayed on the display screen 200 based on this location information.

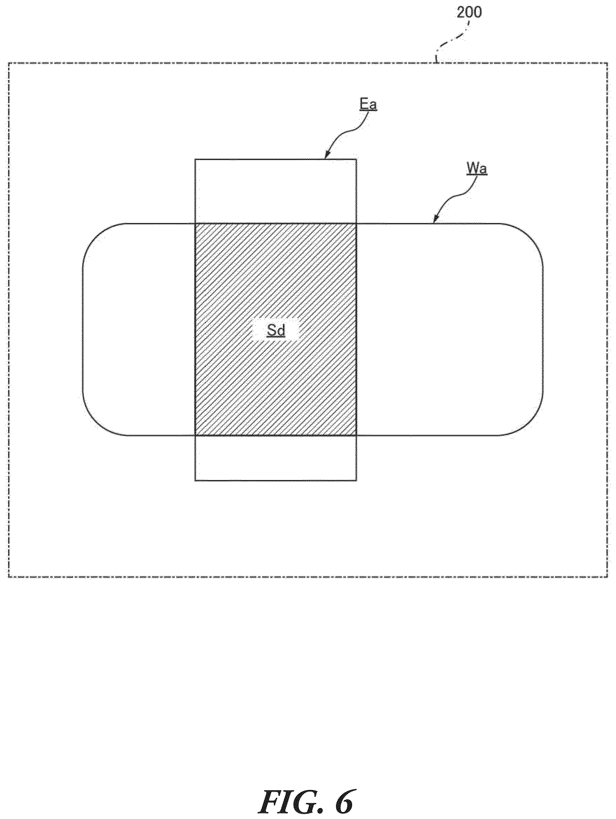

The working area setting section P3 sets an individual enclosed area Ea overlapping with the working area Wa, for the working area Wa displayed on the display screen 200. To set the enclosed area Ea, drawing function of the working area setting section P3 is used to draw the enclosed area Ea by an input to the display screen 200. In this case, as operation and input means, a well-known user interface with mouse input or touch input is used, and the enclosed area Ea can be set by an input to the display screen 200 to draw a plane figure as illustrated in Fig. 6. In this way, the setting of the enclosed area Ea by a plane figure is available when, in particular, the desired enclosed area Ea corresponds to the plane figure, and the enclosed area Ea can be easily set by one operation. Here, the inputted plane figure is not limited to the illustrated rectangular figure, but a circular figure, an elliptical figure, and other polygonal figures may be optionally inputted.

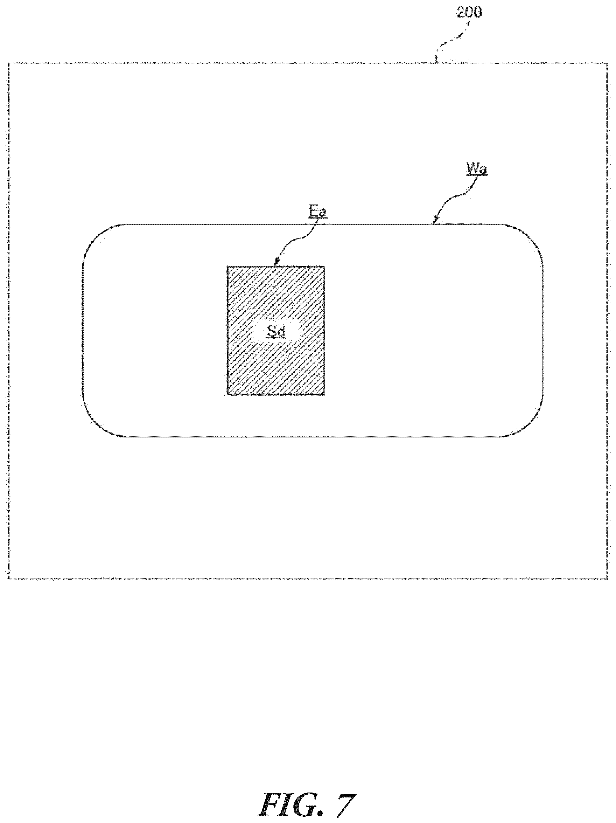

After setting the inputted enclosed area Ea, the working area setting section P3 sets an overlap part of the working area Wa and the enclosed area Ea as a small district Sd in the working area Wa. With the example illustrated in Fig. 6, part of the enclosed area Ea is set outside the working area Wa, but the enclosed area Ea may be set inside the working area Wa as illustrated in Fig. 7. When the enclosed area Ea is set inside the working area Wa, the enclosed area Ea matches the small district Sd.

With the above-described example, the enclosed area Ea is set by an input to draw the plane figure using the drawing function. Alternatively, the enclosed area Ea may be set by a plurality of point coordinates inputted to the coordinate plane encompassing the working area Wa. In this way, the enclosed area Ea is set by the point coordinates, and therefore it is possible not only to accept complicated land forms, but also to set the enclosed area Ea in conformity with a precise request from the user. In this case, by using the well-known user interface, point coordinates D1 (X1, Y1), D2 (X2, Y2), D3 (X3, Y3) and D4 (X4, Y4) are inputted to the display screen 200, and the enclosed area Ea is set by connecting the point coordinates. Here, with the illustrated example, the point coordinates are inputted outside the working area Wa. However, the point coordinates may be inputted inside the working area Wa.

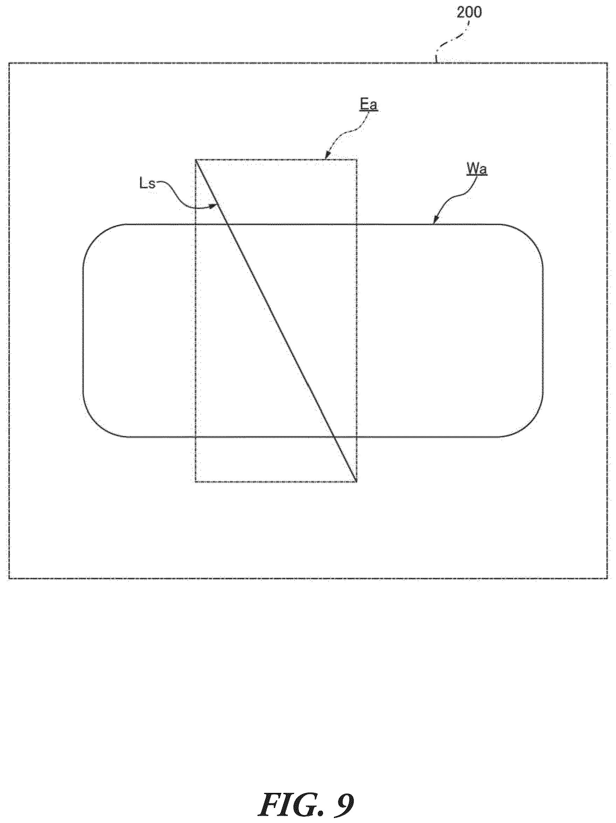

In addition, the enclosed area Ea may be set by line Ls inputted to the input screen 200 as illustrated in Fig. 9. In this case, also by using the well-known user interface, the line Ls is inputted to set the enclosed area Ea by the plane figure having the line Ls as a diagonal line as illustrated in Fig. 9.

To set the enclosed area Ea, for example, by using a drawing editor function provided in the working area setting section P3, the plane figure inputted once may be enlarged, reduced, rotated or deformed to obtain the enclosed area Ea having a desired shape or dimension accordingly.

A plurality of enclosed areas Ea may be set. After one enclosed area Ea is individually set as illustrated in Fig. 6, another enclosed area Ea may be individually set. In this case, after one enclosed area (first enclosed area) Ea is set, another adjacent enclosed area Ea may be set.

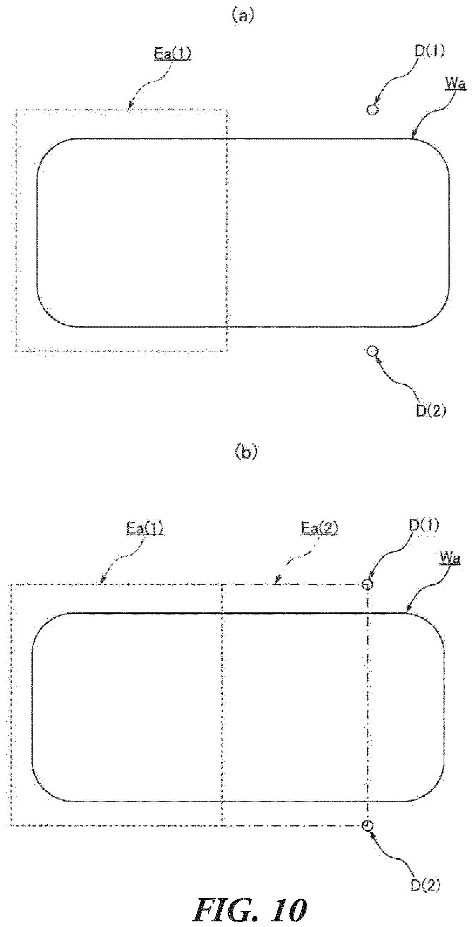

As illustrated in Fig. 10(a), after the first enclosed area Ea(1) is set, two point coordinates D(1) and D(2) are inputted. By this means, it is possible to set a second enclosed area Ea(2) adjacent to the first enclosed area Ea(1) as illustrated in Fig. 10(b). In this case, one side of the second enclosed area Ea(2) is shared with the first enclosed area Ea(1). Here, with the illustrated example, two point coordinates are inputted. However, it is possible to set the second enclosed area Es(2) adjacent to the first enclosed area Ea(1) likewise by only one point coordinate.

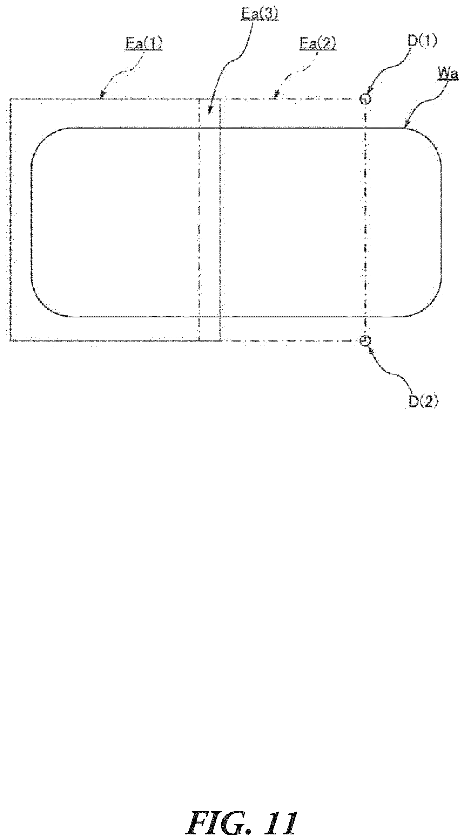

To set the second enclosed area Ea(2) adjacent to the first enclosed area Ea(1) likewise, the point coordinates are set in the same way as Fig. 10(a), the second enclosed area Ea(2) having an overlap area Ea(3) partially overlapping with the first enclosed area Ea(1) may be set as illustrated in Fig. 11. For example, by inputting any numeric value in any unit as an intended width of the overlapping, it is possible to form the desired overlap area Ea(3). In this way, the overlap area Ea(3) is formed, and therefore it is possible to solve a problem that a working area in which the work is not done is formed between two enclosed areas Ea(1) and Ea(2) due to an GNSS error.

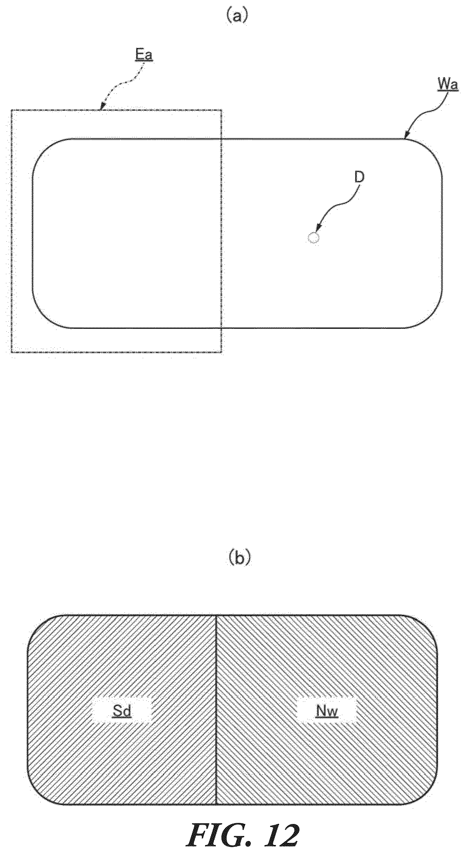

The working area setting section P3 sets the enclosed area Ea for the working area Wa as illustrated in Fig. 12(a) to set the small district Sd in the working area as illustrated in Fig. 12(b), and inputs a point coordinate D in the working area Wa but outside the enclosed area Ea to set the working area Wa encompassing the point coordinate D as a non-working district Nw. In this case, even though the point coordinate D is not inputted, all the part outside the enclosed area Ea may necessarily be set as the non-working district.

Here, the enclosed area Ea is set as the small district Sd, and all the part outside the enclosed area Ea is set as the non-working district Nw. However, in contrast to this, the enclosed area Ea may be set as the non-working district Sd, and all the part outside the enclosed area Ea may be set as the small district Nw in the working area. The work content of each of the districts may be changed by a button on the screen or by operating a button of the input part. By this means, it is possible to immediately set an area having a meaning to the district in the working area Wa and outside the enclosed area Ea.

As illustrated in Fig. 12(b), it is possible to identify the district on the screen by a color or a pattern, depending on the work content of the working robot in the district set by the enclosed area Ea. In this case, the district may be identified by the color or the pattern of the whole partitioned area, or may be identified by the color or the type of the border line. In these ways, the user can visually recognize each of the districts and the work in the district, and therefore it is possible to improve the ease of operation to set and record the works.

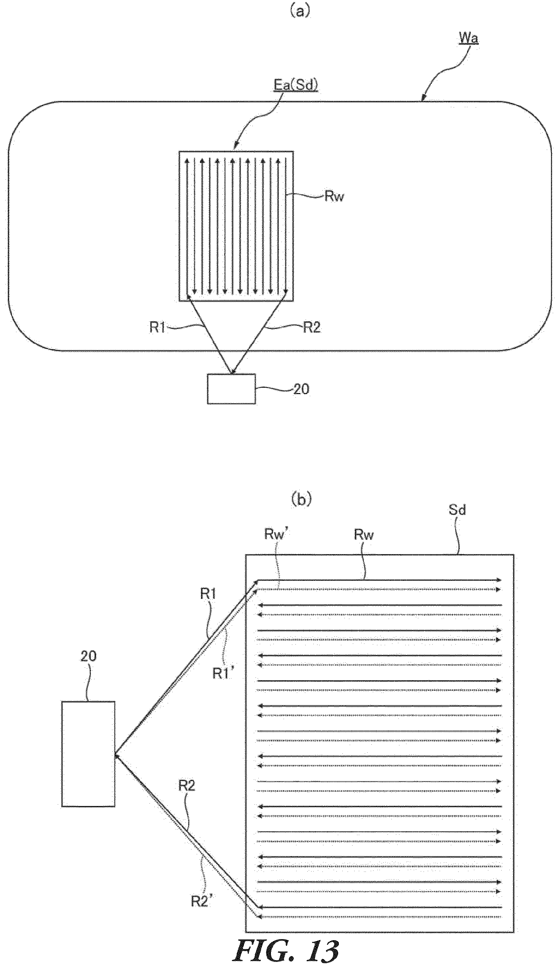

After the small district Sd of the working area Wa by setting the enclosed area Ea for the working area Wa, the traveling route setting section P4 sets a traveling route Rw for the work in the small district Sd. The traveling route Rw may be set as, for example, a shuttle route formed by parallel straight lines as illustrated in Fig. 13(a), or another route such as a turn route is possible.

In addition, when the small district Sd is set as illustrated in Fig. 13(a), the traveling route setting section P4 sets a traveling route R1 from the base 20 to the work start point of the small district Sd, and also sets a traveling route R2 from the work end point of the small district Sd to the base 20.

In this case, it is preferred that the traveling route setting section P4 sets the traveling route for each time such that at least part of the traveling route is different from the traveling route set previously. With the example illustrated in Fig. 13(b), traveling routes Rw', R1', and R2' indicated by dashed lines are set to be slightly shifted from traveling routes Rw, R1, and R2 set previously, and therefore not to overlap the traveling routes Rw, R1, and R2 set previously with the traveling routes Rw', R1', and R2' set this time. In this way, the overlap of the traveling routes is minimized, and therefore it is possible to prevent the deterioration of the field F due to the tire marks of the working robot 10.

The small district Sd obtained by setting the enclosed area Ea for the working area Wa can be set as an area having a meaning such as a preferential working area. In this case, the enclosed area Ea is individually set without dividing the working area Wa into a plurality of areas, and a preferential working area can be immediately set to the obtained small district Sd. Therefore, it is possible to speedily set the individual area having a meaning for the working area Wa.

The working area setting section P3 can communicate with the control unit U, and can be provided in an external device which can be operated by the user. This external device is a personal computer or a mobile phone terminal including an input part such as a mouse and a button, and a display such as a screen. In addition, the input part of the external device may also be used as the display, in the same way as a smart phone and a tablet terminal.

After the working area setting section P3 sets the enclosed area Ea, the work content setting section P5 sets the work content for the enclosed area Ea and the work content for the area other than the enclosed area Ea. In this case, the work content (at least one of the work time, the work frequency, the work sequence, and the work load) of the enclosed area Ea can be set to be different from the work content of the area other than the enclosed area Ea.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1: robotic working apparatus
10: working robot, 10A, 20A, 30A, U: controller
10T: working state detector,
11: traveling part, 11A: traveling drive part,
12: working tool, 12A: working drive part
12S: blade device, 12P: collection device,
14: battery, 15: measurement part, 16: position detector,
17, 21, 31: communication part,
20: base, 22: charging device, 33: management device,
100: satellite, 200: display screen,
P1: traveling motion control section,
P2: working motion control section,
P3: working area setting section,
P4: traveling route setting section,
P5: work content setting section,
Ea: enclosed area, Ls: line,
D, D1, D2, D3, D4: point coordinate,
F: field, Wa: working area,
Sd: small district, Nw: non-working district,
Rw, R1, R2, Rw', R1', R2': traveling route,
O: target object

## Claims

1. A robotic working apparatus comprising:
a working robot configured to perform work while autonomously traveling in a set working area; and
a controller configured to control motion of the working robot and including a working area setting section configured to partition and set the working area,
wherein the working area setting section sets an individual enclosed area overlapping with an existing working area.

2. The robotic working apparatus according to claim 1, wherein the enclosed area is set by a plurality of point coordinates inputted on a plane coordinate encompassing the working area.

3. The robotic working apparatus according to claim 1, wherein the enclosed area is set by a plane figure which is drawn by an input to a screen corresponding to a plane coordinate encompassing the working area.

4. The robotic working apparatus according to one of claims 1 to 3, wherein the enclosed area includes a first area and a second area adjacent to the first area which is set after the first area is set.

5. The robotic working apparatus according to one of claims 1 to 3, wherein the enclosed area includes a first area and a second area which is set after the first area is set and partially overlaps with the first area.

6. The robotic working apparatus according to one of claims 1 to 5, wherein the working area setting section sets an overlap part of the working area and the enclosed area as a small district in the working area.

7. The robotic working apparatus according to claim 6, wherein the working area setting section sets part of the working area other than the overlap part as a non-working district.

8. The robotic working apparatus according to one of claims 1 to 7, wherein the working area setting section can communicate with the controller, and is an external device which can be operated by a user.

9. The robotic working apparatus according to one of claims 1 to 8, wherein the enclosed area on a screen can be identified by a color and/or a pattern, depending on a motion of the working robot in the enclosed area.

10. The robotic working apparatus according to claim 6, wherein:
the controller includes a traveling route setting section configured to set a traveling route of the working robot; and
the traveling route setting section automatically sets the traveling route for the set small district.

11. The robotic working apparatus according to claim 10, wherein the traveling route setting section sets the traveling route to perform the work in the small district.

12. The robotic working apparatus according to one of claims 10 and 11, wherein the traveling route setting section sets the traveling route between a base and the small district.

13. The robotic working apparatus according to one of claims 10 to 12, wherein the traveling route setting section sets the traveling route such that the at least part of the traveling route is different from the traveling route set previously.

14. The robotic working apparatus according to one of claims 1 to 13, wherein:
the controller includes a work content setting section configured to set a work content in a set working area; and
the work content setting section sets the work content such that the work content of the enclosed area is different from the work content of an area other than the enclosed area.

15. The robotic working apparatus according to claim 14, wherein the work content is at least one of a work time, a work frequency, a work sequence, and a work load.
